# EUROPEAN PATENT SPECIFICATION

(11) **EP 2 166 738 B1**
(45) Date of publication and mention of the grant of the patent: **20.08.2014**
(21) Application number: 09170034.4
(22) Date of filing: 11.09.2009
(51) Int. Cl.: H04M 3/46

(54) **Method and apparatus for implementing one-number service**
Verfahren und Vorrichtung zur Implementierung eines Einnummern-Dienstes
Procédé et appareil pour la mise en oeuvre du service un-numéro

(30) Priority: 17.09.2008 CN 200810222355
(43) Date of publication of application: 24.03.2010
(73) Proprietor: Huawei Technologies Co., Ltd., Longgang District, Shenzhen Guangdong 518129 (CN)
(72) Inventor: Wang, Min, Shenzhen Guangdong 518129 (CN); Cai, Yongfeng, Shenzhen Guangdong 518129 (CN); Hu, Haihua, Shenzhen Guangdong 518129 (CN); Zhang, Wenhu, Shenzhen Guangdong 518129 (CN)
(74) Representative: Körber, Martin Hans

(56) References cited:
- WO-A-97/50234
- WO-A-99/38342
- WO-A-2005/079160
- US-A- 6 141 556
- US-A1- 2004 160 931
- US-B1- 6 876 738

## Description

### FIELD OF THE INVENTION

The invention relates to the technical field of communications, and more particularly, to a method and apparatus for implementing a one-number service.

### BACKGROUND

With the reorganization of operators in Chinese telecommunication market, an operator no longer operates only one of a mobile network and a fixed network, but may operate both the mobile network and the fixed network. At present, fixed network operators have launched a one-number service in which a PHS terminal (commonly referred to as "little smart") and a fixed phone may share the same number. Such a one-number service attracts a large number of customers and makes a great success.

The existing one-number service described above is mainly characterized in that only one of the fixed phone number and the litter smart number may be the primary number. Only after a subscriber dials the primary number for the one-number service, can the two terminals ring simultaneously. And after one of the two terminals is answered, the other one stops ringing.

During implementation of the present invention, the inventor has found that some problems exist in the one-number service according to the related art.

The above one-number service is only applicable to the combination of a fixed phone terminal and a little smart. After the reorganization of operators, the market of the little smart is shrinking gradually, resulting in decrease in the number of subscribers subscribing to the one-number service. The above one-number service is not applicable to mobile phone terminals that hold a large population of subscribers. Furthermore, there is only one primary number in the above one-number service.

Document D1 (WO publication number: 97/50234 A) discloses a method for a subscriber's wired and mobile stations through an added network interface which comprises an interface switch having basic switching functionality, a controller and a plurality of base station units.

### SUMMARY

The invention provides a method and apparatus for implementing a one-number service according to various embodiments, so as to solve the problem that the one-number service in the related art is not applicable to mobile phone terminals and allows only one primary number.

A one-number service server is provided, including:
a call receiving module(11), configured to receiving a call reported by a mobile switching center, MSC, in a mobile network intended for the called terminal which is a mobile phone terminal;
a number conversion module(15), configured to learn, after acquiring information of a number of the called terminal based on information reported by the MSC in the mobile network, that the number of the called terminal subscribes to same one-number service as a number of an another terminal, and convert the number of a called terminal into a first specific number store a corresponding relationship between a calling number, and the number of the called terminal before and after the conversion, and return the call comprising the first specific number to the MSC in the mobile network so that the MSC in the mobile network forwards the call comprising the first specific number to a soft switch in a fixed network based on the first specific number and based on a routing rule preset in the MSC for the first specific number; wherein, the first specific number is used to indicate that the called terminal has subscribed to the one-number service;
wherein, the call receiving module(11) is further configured to receive the call comprising the first specific number, wherein, the call comprising the first specific number is triggered by the soft switch in the fixed network; and the one-number service server is further comprises:
   an information acquisition module(12), configured to acquire after receiving the call comprising the first specific number from the soft switch of the fixed network, according to the first specific number and the stored corresponding relationship between the calling number, and the number of the called terminal before and after the conversion, information about the called terminal and information about the another terminal subscribing to the same one-number service as the called terminal, and query a mobile station roaming number, MSRN, for the number of the called number from Home Location Register, HLR; and
   a call delivery module(13), configured to deliver a call comprising the MSRN and a call comprising the number of the another terminal respectively to the soft switch in the fixed network so that the soft switch in the fixed network triggers the mobile network to connect the call comprising the MSRN and triggers the fixed network to connect the call comprising the number of the another terminal.

A method for implementing a one-number service is provided, where more than one terminal subscribing to the same one-number service includes at least one mobile subscriber terminal, the method including:
receiving, by a one-number service server, a call reported by a MSC in a mobile network intended for the called terminal which is a mobile phone terminal and learning, after acquiring information of a number of the called terminal based on information reported by the MSC of the mobile network, that the number of the called terminal subscribes to same one-number service as a number of the another terminal, converting the number of the called terminal into a first specific number, ; wherein, the first specific number is used to indicate that the called terminal subscribes to the one-number service;
storing, by the one-number service server, a corresponding relationship between a calling number, and the number of the called terminal before and after the conversion;
and returning, by the one-number service server, the call comprising the first specific number to the MSC in the mobile network so that the MSC in the mobile network forwards the call comprising the first specific number to a soft switch in the fixed network based on the first specific number and based on a routing rule preset in the MSC for the first specific number;
receiving, by the one-number service server, the call comprising the first specific number which is triggered by the soft switch in the fixed network;
acquiring after receiving the call comprising the first specific number from the soft switch of the fixed network, according to the first specific number and the stored corresponding relationship between the calling number, and the number of the called terminal before and after the conversion, information about the called terminal and information about the another terminal subscribing to the same one-number service as the called terminal, and querying a mobile station roaming number ,MSRN, for the number of the called number from Home Location Register, HLR; and
delivering a call comprising the MSRN and a call comprising the number of the another terminal respectively to the soft switch in the fixed network so that the soft switch in the fixed network triggers the fixed network to connect the call comprising the number of the another terminal and triggers the mobile network to connect the call comprising the MSRN.

From the technical solution provided in the embodiments of the invention, it can be seen that the embodiments of the invention provide a one-number service server which makes full use of the combinational advantage in the current integration of the mobile and fixed networks and provide a one-number service applicable to both mobile network terminals and fixed network terminals. In addition, each subscriber terminal subscribing to the same one-number service may be implemented as a primary terminal.

### BRIEF DESCRIPTION OF THE DRAWINGS

In order to illustrate more clearly the technical solutions according to the embodiments of the invention, the accompanying drawings, which are to be used in the presentation of the embodiments, are described briefly below. It is obvious to a person of ordinary skill in the art that the figures described below merely represent some of the embodiments of the invention, and that other figures may be derived from these figures without resorting to undue experimentation.

Fig.1 is a block diagram of a one-number service server according to a first embodiment of the invention;

Fig.2 is a schematic diagram of a networking scheme for implementing a one-number service by combining the one-number service server with a mobile network and a PSTN network according to the first embodiment of the invention;

Fig.3 is a schematic diagram of a networking scheme for implementing a one-number service by combining the one-number service server with a mobile network and an NGN network according to the first embodiment of the invention;

Fig.4 is a schematic diagram of a networking scheme for implementing a one-number service by combining the one-number service server with a mobile network and an IMS network according to the first embodiment of the invention;

Fig.5 is a flowchart of a process for a subscriber to dial a fixed phone terminal number so that two phone terminals ring simultaneously according to a second embodiment of the invention;

Fig.6 is a flowchart of a process for a subscriber to dial a mobile phone terminal number so that two phone terminals ring simultaneously according to a third embodiment of the invention; and

Fig.7 is a flowchart of a process for a subscriber to dial a mobile phone terminal number so that two mobile terminals ring simultaneously according to a fourth embodiment of the invention.

### DETAILED DESCRIPTION

In embodiments of the invention, a one-number service server is provided which may communicate with a mobile network and a fixed network via various communication protocols. The one-number service server receives information about a call intended for a called terminal subscribing to the one-number service which is reported by a service triggering unit in a fixed network, acquires information about the called terminal and information about another terminal subscribing to the same one-number service as the called terminal, and delivers the calls intended for the called terminal and the another terminal respectively to the service triggering unit in the fixed network. As a result, the service triggering unit in the fixed network triggers the fixed network and a mobile network to connect the calls intended for the called terminal and the another terminal, or the service triggering unit in the fixed network triggers the mobile network to connect the calls intended for the called terminal and the another terminal.

Further, the one-number service server stores information about a subscriber terminal subscribing to the one-number service, and stores information about more than one terminal subscribing to the same one-number service in an associated manner. The more than one terminal subscribing to the same one-number service includes at least one mobile subscriber terminal.

Further, when the called terminal is a fixed terminal and the another terminal is a mobile terminal, the service triggering unit in the fixed network triggers the fixed network to connect the call intended for the fixed terminal and forwards the received call intended for the mobile terminal to the mobile network for connection.

Further, upon receiving a call intended for a called terminal which is reported by the mobile network and learning that the called terminal and another terminal have subscribed to the one-number service, the one-number service server converts the number of the called terminal into a first specific number, the first specific number used to indicate that the called terminal has subscribed to the one-number service. When the another terminal is a fixed terminal and the first specific number is the number of fixed terminal, the one-number service server converts the calling number of the call into a second specific number used to indicate that the calling number has triggered a called process. The corresponding relationship between the calling and called numbers before the conversion and the calling and called numbers after the conversion is stored.

Further, when the called terminal is a mobile terminal, a number conversion module converts the calling number and the called number of a call intended for the mobile terminal reported by the mobile network after the one-number service server receives the call, and returns the converted call to the mobile network so that the mobile network forwards the converted call to the fixed network based on the converted number of the mobile terminal. After receiving information about the converted call reported by the service triggering unit in the fixed network, the one-number service server searches the number conversion module for information about the calling and called numbers before the conversion, and delivers the calls intended for the mobile terminal and the another terminal to the service triggering unit in the fixed network.

Further, after the calls intended for various terminals subscribing to the one-number service are delivered, the ringing modes are set for the terminals, including:
sequential ringing, co-ringing, mixed ringing, ringing based on a time pattern, scenario specific ringing, etc.

Further, when a terminal subscribing to the one-number service places an outgoing call, a display mode is set for the calling number of the terminal. The display mode may include: the calling number being displayed as the number of terminal placing the outgoing call; or the calling number being displayed fixedly as the number of the mobile phone terminal subscribing to the one-number service; or the calling number being displayed fixedly as the number of the fixed phone terminal subscribing to the one-number service; or the calling number being displayed as the number set by the subscriber independently.

In order to understand the embodiments of the invention more easily, some specific embodiments will be provided in further details below by way of example in conjunction with the accompanying drawings. The invention is not limited to these specific embodiments.

### The first embodiment

In this embodiment, a one-number service server is provided, which may communicate with a mobile network and a fixed network. The one-number service server may cooperate with the mobile network and the fixed network to provide a one-number service for each terminal subscribing to the one-number service.

The terminals subscribing to the one-number service may be two mobile phone terminals, one mobile phone terminal and one fixed phone terminal, or two fixed phone terminals (including the little smart). Moreover, the two terminals both may function as a primary terminal subscribing to the one-number service. In other words, when a subscriber dials any one of the terminals subscribing to the one-number service, the two terminals may ring at the same time. When one of the terminals is answered, the other one stops ringing.

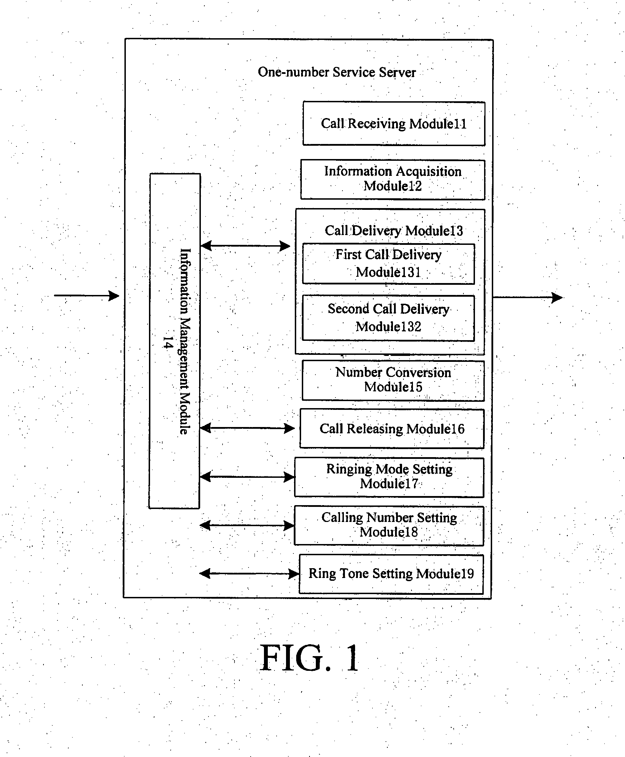

Fig. 1 shows a block diagram of a configuration of the one-number service server. The following modules are included.

A call receiving module 11 is configured to receive a call intended for a called terminal subscribing to the one-number service, the call being reported by a service triggering unit in the fixed network.

An information acquisition module 12 is configured to acquire information about the called terminal and information about another terminal subscribing to the same one-number service as the called terminal.

A call delivery module 13 is configured to deliver calls intended for the called terminal and the another terminal respectively to the service triggering unit in the fixed network so that the service triggering unit in the fixed network triggers the fixed network and a mobile network to connect the calls intended for the called terminal and the another terminal or the service triggering unit in the fixed network triggers the mobile network to connect the calls intended for the called terminal and the another terminal.

The one-number service server may further include the following modules.

An information management module 14 is configured to store and manage information about all subscriber terminals subscribing to the one-number service, and to store information (such as, the numbers of the terminals, or the like) about two terminals subscribing to the same one-number service in an associated manner.

A number conversion module 15 is configured to convert the number of a called terminal into a first specific number upon receiving the call intended for the called terminal which is reported by the mobile network and learning that the called terminal and another terminal have subscribed to the one-number service, the first specific number used to indicate that the called terminal has subscribed to the one-number service; convert the calling number of the call into a second specific number when the another terminal is a fixed terminal and the first specific number is the number of the fixed terminal, the second specific number used to indicate that the calling number has triggered a called process; and store the corresponding relationship between the calling and called numbers before the conversion and the calling and called numbers after the conversion.

A call releasing module 16 is configured to, after a terminal subscribing to the one-number service connects the call, release the call intended for the another terminal subscribing to the one-number service.

A ringing mode setting module 17 is configured to set a ringing mode for each terminal subscribing to the one-number service after delivering the call intended for the terminal. Various ringing modes may include: sequential ringing, co-ringing, mixed ringing, ringing based on a time pattern, scenario specific ringing, etc.

A calling number setting module 18 is configured to set a display mode for the calling number of a terminal subscribing to the one-number service when the terminal places an outgoing call. Various display modes may include: the calling number being displayed as the number of the terminal; the calling number being displayed fixedly as the number of the mobile phone terminal subscribing to the one-number service; the calling number being displayed fixedly as the number of the fixed phone terminal subscribing to the one-number service; or the calling number being displayed as the number set by the subscriber independently.

A ring tone setting module 19 is configured to determine a terminal of which a ring back tone/customized RBT is to be played to a caller when each of the terminals subscribing to the one-number service rings in response to the caller calling one of the terminals subscribing to the one-number service.

The call delivery module 13 may further include a first call delivery module 131 and a second call delivery module 132.

When the called terminal is a fixed terminal and the another terminal is a mobile terminal, the first call delivery module 131 is configured to deliver calls intended for the called terminal and the another terminal respectively to the service triggering unit in the fixed network, which in turn triggers the fixed network to call the fixed terminal and forwards the received call intended for the another terminal to the mobile network for connection.

When the called terminal is a mobile terminal, the second call delivery module 132 is configured to, upon receiving a call intended for the mobile terminal which is reported by the mobile network, convert the calling and called numbers of the call via the number conversion module and return the converted call to the mobile network so that the mobile network forwards the converted call to the fixed network based on the converted number of the mobile terminal; and upon receiving information about the converted call reported by the service triggering unit in the fixed network, search the number conversion module for information about the calling and called numbers before the conversion and deliver the calls intended for the mobile terminal and the another terminal respectively to the service triggering unit in the fixed network.

The mobile network described above may include a Global System for Mobile communications (GSM) network, a code division multiple access (CDMA) network, a Wideband Code Division Multiple Access (WCDMA) network, a third Generation Mobile Telecommunication (3G) network, an IP Multimedia Subsystem (IMS) network, etc. The fixed network described above may include a Public Switched Telephone Network (PSTN), a Next Generation Network (NGN), etc.

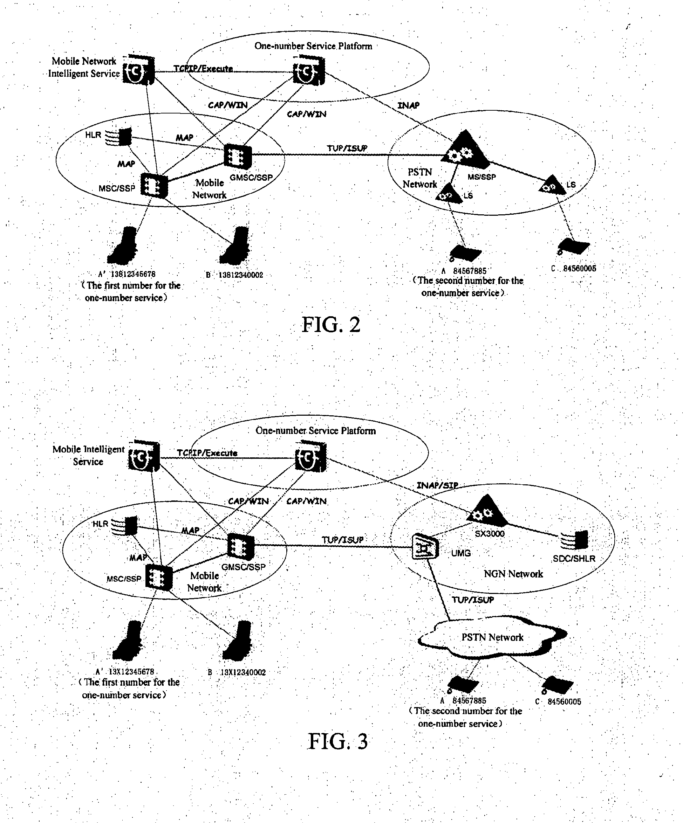

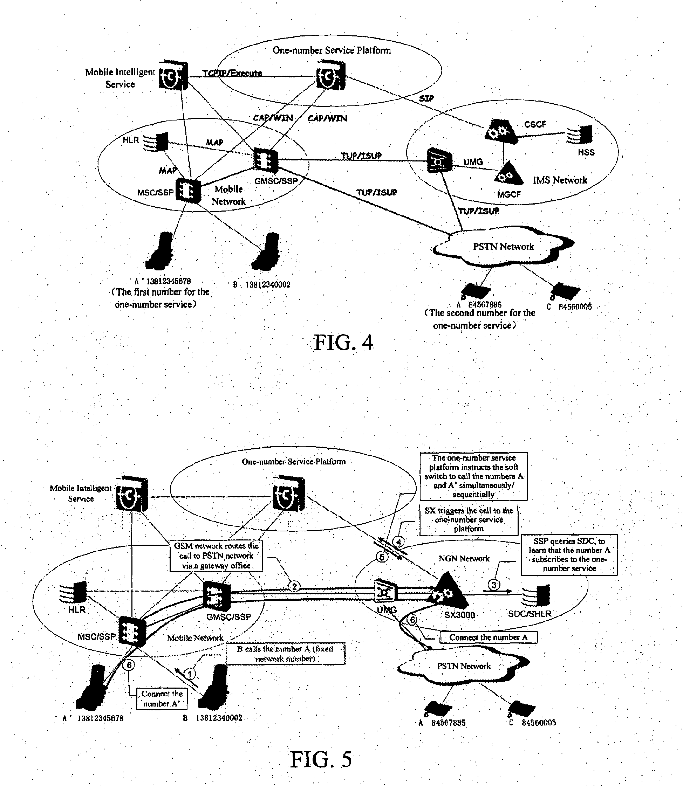

As shown in Fig. 2, the networking scheme for implementing the one-number service by combining the one-number service server with the mobile network and the PSTN network is provided according to this embodiment. As shown in Fig. 3, the networking scheme for implementing the one-number service server by combining the one-number service with the mobile network and the NGN network is provided according to this embodiment. As shown in Fig. 4, the networking scheme for implementing the one-number service by combining the one-number service server with the mobile network and the IMS network is provided according to this embodiment.

### The second embodiment

In this embodiment, the one-number service consists of one mobile phone terminal and one fixed phone terminal, and the mobile phone terminal number and the fixed phone terminal number may both function as the primary number for the one-number service.

Fig. 5 shows a flowchart of a process for a subscriber to dial the fixed phone terminal number so that two phones ring simultaneously as provided in this embodiment. It includes the following steps.

In step 51, a fixed phone terminal and a mobile phone terminal subscribing to the same one-number service have their respective numbers as A and A'. The fixed phone terminal is located in the NGN network and the mobile phone terminal is located in the GSM network.

A mobile phone terminal B calls the number A of the fixed phone terminal subscribing to the one-number service.

In step 52, the GSM network in which the mobile phone terminal B is located identifies that the number A is a fixed network number, and a gateway office of the GSM network routes the call to the NGN network.

In step 53, upon receiving the call, a soft switch (SX3000) of the NGN network searches a Subscriber Data Center (SDC)/Smart Home Location Register (SHLR) for the service attributes corresponding to the called number A.

In the embodiment of the invention, information about all fixed network subscribers subscribing to the one-number service is required to be stored in the SDC/SHLR. Thus, the soft switch may find that the subscriber with the number A has subscribed to the one-number service.

In step 54, the soft switch, functioning as a triggering unit for the one-number service, triggers the call to the one-number service server. In the triggering process, information about the calling and called numbers of the call is reported to the one-number service server.

The soft switch and the one-number service server may communicate with each other by using the Session Initiation Protocol (SIP) or the Intelligent Network Application Part (INAP) protocol.

For a narrowband fixed network, the triggering unit for the one-number service corresponding to the soft switch is a Service Switch Point (SSP). Only the INAP protocol may be used for the SSP to communicate with the one-number service server. For an IMS network, the service triggering point for the one-number service corresponding to the soft switch is a Call Server Control Function (CSCF). Only the SIP may be used for the CSCF to communicate with the one-number service server.

In step 55, after acquiring information about the called number A based on the information reported by the soft switch, the one-number service server queries the stored information about all the subscriber terminals subscribing to the one-number service and about the terminal numbers, so as to obtain the number A' of a mobile phone subscribing to the same one-number service as the called number A.

For example, when the one-number service server and the soft switch communicate with each other by using the SIP, the one-number service server delivers two calls to the soft switch simultaneously, one calling the called number A and the other one calling the mobile phone number A'.

In step 56, after the soft switch receives a call intended for the called number A that is delivered by the one-number service server, a gateway office/tandem office of the NGN network routes the call to a phone terminal office of the NGN network, which completes the subsequent operation for calling the called number A.

After the soft switch receives a call intended for the mobile phone number A' that is delivered by the one-number service server, a gateway office/tandem office of the NGN network routes the call back to the GSM network, which completes the subsequent operation for calling the mobile phone number A'.

According to the above process, when the subscriber dials the fixed phone terminal number, the mobile phone terminal subscribing to the same one-number service as the fixed phone terminal rings at the same time as the fixed phone terminal.

After one of the fixed phone terminal and the mobile phone terminal answers the call, the call intended for the other one is released by the soft switch or the one-number service server. In the INAP protocol, when one call is connected, the soft switch releases the other call. In the SIP protocol, the one-number service server instructs the soft switch to release the other call by using the cancel message in the SIP.

### The third embodiment

In this embodiment, the one-number service consists of a fixed phone terminal with number A and a mobile phone terminal with number A', and the number A and the number A' may both function as the primary number for the one-number service.

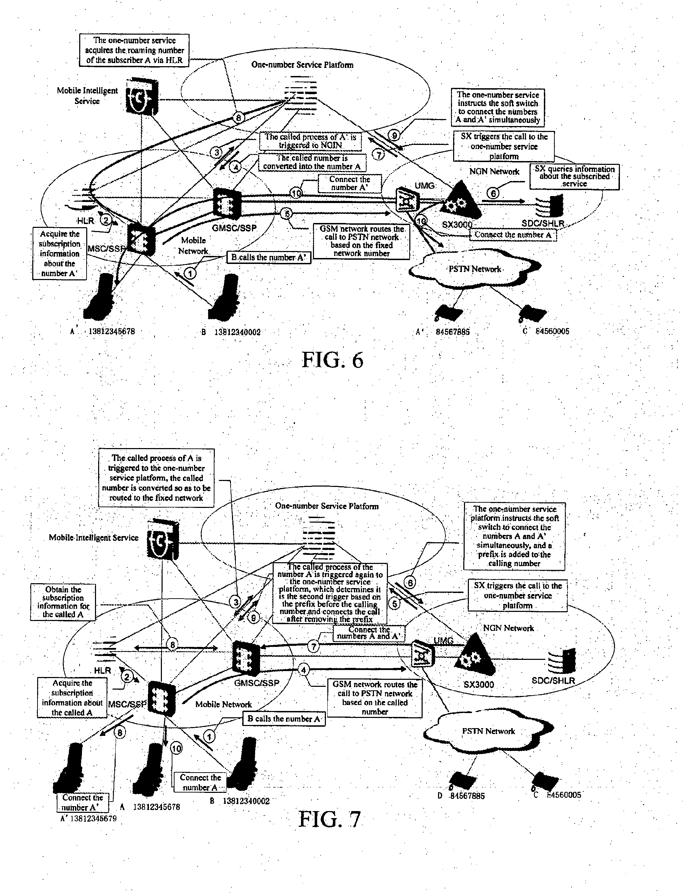

As shown in Fig. 6, a flowchart of a process for a subscriber to dial the mobile phone terminal number so that two phones ring simultaneously as provided in the embodiment of the invention. It may include the following steps.

In step 61, the mobile phone terminal B calls the number A' of the mobile phone terminal subscribing to the one-number service.

In step 62, a mobile switching center (MSC) of the GSM network in which the mobile phone terminal B is located, initiates a request for querying the subscriber information to a Home Location Register (HLR) for the mobile terminal with the number A'.

In this embodiment of the invention, information about the numbers of all mobile terminals subscribing to the one-number service is required to be stored in the HLR. Thus, information indicating that the mobile terminal subscribes to the one-number service is required to be added into the intelligent service subscription attributes of the mobile terminal.

The HLR returns the subscription attributes of the mobile terminal to the MSC.

In step 63, after receiving the subscription attributes of the mobile terminal with the number A' which is returned by the HLR, the MSC learns that the mobile terminal with the number A' has subscribed to the one-number service. Then, the MSC triggers the call to the one-number service server. During the triggering process, the information about the calling number and the called number A' of the call is reported to the one-number service server.

In step 64, after acquiring the information about the called number A' based on the information reported by MSC, the one-number service server queries the stored information about all the subscriber terminals subscribing to the one-number service and about the terminal numbers, so as to learn that the called number A' subscribes to the same one-number service as the number A of the fixed terminal.

The one-number service server may convert the called number A'. The conversion may be performed in a flexible manner. For example, A' is changed into the number A, a specific access number +A, a specific access number +A', or a virtual roaming number assigned dynamically by the one-number service server for each call.

If the called number A' is converted directly into the number A, the one-number service server is required to add a specific prefix (e.g., 61) to the calling number of the mobile terminal B so that when a subsequent call is triggered to the one-number service server via the SSP/soft switch/CSCF, the one-number service server can identify that the call has triggered the called process in the mobile network and connection may be made by directly using the roaming number of the number A' in a subsequent step. Thereby, after a call is routed to the mobile network, the service logic of circularly triggering the conversion of the route of the called party to the fixed network may be avoided in the mobile network.

The one-number service server stores the corresponding relationship between the calling and called numbers before the conversion and the calling and called numbers after the conversion. Then, the call with its called number and calling number being converted is returned to the MSC.

In step 65, a routing rule is preset in the MSC for the converted called number. The routing rule provides that the call with the converted called number is routed to the soft switch of the NGN network.

After receiving the call delivered by the one-number service server, the MSC queries the routing rule based on the converted called number and routes the call to the soft switch of the NGN network via a gateway office of the GSM network.

In step 66, if the called number converted in the step 65 is the number A, the soft switch searches the SDC/SHLR for the service attributes corresponding to the converted called number, so as to learn that the fixed terminal with the number A subscribes to the one-number service.

Otherwise, based on the specific access number added before the called number or a specific number segment to which the virtual roaming number belongs, the soft switch may directly determine that the called number subscribes to the one-number service.

In step 67, the soft switch triggers the call to the one-number service server. In the triggering process, the converted calling number and called number are reported to the one-number service server.

The soft switch and the one-number service server may communicate with each other by using the SIP or the INAP protocol.

In step 68, based on the converted calling number and called number reported by the soft switch, the one-number service server queries the stored corresponding relationship between the calling and called numbers before the conversion and the calling and called numbers after the conversion, so as to obtain the original calling and called numbers before the conversion. A mobile station roaming number (MSRN) for the number A' is queried from the HLR after it is identified that the original called number of the call is the mobile phone number A'.

In step 69, the one-number service server delivers the call to the soft switch.

For example, when the one-number service server and the soft switch communicate with each other by using the SIP, the one-number service server delivers two calls to the soft switch simultaneously, one calling the fixed terminal number A and the other one calling the roaming number for the mobile phone number A'.

In step 610, after the soft switch has received the call intended for the called number A that is delivered by the one-number service server, a gateway office/tandem office of the NGN network routes the call to a phone terminal office of the NGN network, which completes the subsequent operation for calling the called number A.

After the soft switch has received the call that is delivered by the one-number service server and calls the roaming number for the mobile phone number A', a gateway office/tandem office of the NGN network routes the call back to the GSM network, which completes the subsequent operation for calling the mobile phone number A'.

According to the above process, when the subscriber dials the mobile phone terminal number, the fixed phone terminal subscribing to the same one-number service as the fixed phone terminal may ring at the same time as the mobile phone terminal.

After one of the fixed phone terminal and the mobile phone terminal connects the call, the call intended for the other one is released by the soft switch or the one-number service server.

In an embodiment of the invention, the number of terminals subscribing to the same one-number service may be more than two. In this case, the one-number service server will deliver more than two calls to the soft switch. The ringing modes of the more than two calls may be configured flexibly in a sequential order on a one-by-one basis, for example, sequential ringing, co-ringing, mixed ringing, ringing based on a time pattern, etc. Thereby, the features of a more generalized one-number service may be implemented.

According to an embodiment of the invention, when a terminal subscribing to the one-number service places an outgoing call, the display mode for the calling number may be set flexibly, including: 1) the calling number being displayed as the original calling number; 2) the calling number being displayed fixedly as the mobile phone terminal number; 3) the calling number being displayed fixedly as the fixed phone terminal number; and 4) the calling number being displayed as the number set by the subscriber independently.

When the display mode of the calling number is determined for the one-number service, it is required to set in the HLR corresponding to the mobile terminal subscribing to the one-number service based on the display mode whether a call is needed to be reported to the one-number service server when the mobile terminal initiates the call, and to set in the SDC/SHLR corresponding to the fixed terminal subscribing to the one-number service whether a call is needed to be reported to the one-number service server when the fixed terminal initiates the call.

If the calling number is displayed as the original calling number, the call initiated by the mobile terminal/fixed terminal is not required to be processed by the one-number service server, and the call initiated by the mobile terminal/fixed terminal is completed directly by the existing mobile network/fixed network.

If the calling number is displayed fixedly as the mobile phone terminal number, a call initiated by the mobile terminal may be completed by the mobile network directly, without the need to be processed by the one-number service server. For a call initiated by the fixed phone, data is needed to be configured in the SDC/SHLR so that the call initiated by the fixed phone can be triggered to the one-number service server, which performs the conversion of the calling number.

If the calling number is displayed fixedly as the fixed phone terminal number, a call initiated by the fixed phone terminal may be completed by the fixed network directly, without the need to be processed by the one-number service server. For a call initiated by the mobile terminal, data is needed to be configured in the HLR so that the call initiated by the mobile terminal can be triggered to the one-number service server, which performs the conversion of the calling number.

If the subscriber may set his own display number independently, data is required to be configured in the HLR of the mobile terminal/the SDC/SHLR of the fixed terminal. In this case, each call initiated by the mobile terminal/fixed terminal is required to be processed by the one-number service server, which performs the conversion of the calling number based on the setting of the subscriber.

### The fourth embodiment

In this embodiment, the one-number service consists of a mobile phone terminal with a number A and another mobile phone terminal with a number A', and the number A and the number A' may both function as the primary number for the one-number service.

As shown in Fig. 7, a flowchart of a process for a subscriber to dial the mobile phone terminal number so that two mobile phone terminals ring simultaneously as provided in this embodiment of the invention. It may include the following steps.

In step 71, a mobile phone terminal B calls the number A of the mobile phone terminal subscribing to the one-number service.

In step 72, the MSC of the GSM network in which the mobile phone terminal B is located initiates a request for querying the subscriber information to the HLR of the mobile terminal with the number A.

In this embodiment of the invention, information about the numbers of all mobile terminals subscribing to the one-number service is required to be stored in the HLR. The information indicating that the mobile terminal has subscribed to the one-number service, is required to be added into the intelligent service subscription attributes of the mobile terminal.

The HLR returns the subscription attributes of the mobile terminal to the MSC.

In step 73, after receiving the subscription attributes of the mobile terminal with the number A which is returned by the HLR, the MSC learns that the mobile terminal with the number A has subscribed to the one-number service. Thus, the MSC triggers the call to the one-number service server. During the triggering process, the information about the calling and called numbers of the call is reported to the one-number service server.

After acquiring the information about the called number A, the one-number service server queries the stored information about all the subscriber terminals subscribing to the one-number service and about the terminal numbers, so as to learn that the called number A and the number A' have subscribed to the same one-number service.

The one-number service server may convert the called number A. The conversion may be performed in a flexible manner. For example, A is changed into a specific access number +A or a virtual roaming number within a specific number segment assigned dynamically by the one-number service server for each call.

The one-number service server stores the corresponding relationship between the called number before the conversion and the called number after the conversion. Then, the one-number service server returns the call with the converted called number to the MSC.

In step 74, a routing rule is preset for the converted called number in the MSC. The routing rule provides that the call with the converted called number is routed to the soft switch of the NGN network.

After receiving the call delivered by the one-number service server, the MSC queries the routing rule based on the converted called number and routes the call to the soft switch of the NGN network via a gateway office of GSM network.

In step 75, the soft switch determines based on the converted called number (the specific access number +A or the virtual roaming number within the specific number segment) that the called number subscribes to the one-number service.

The soft switch triggers the call to the one-number service server. During the triggering process, the converted called number and calling number are reported to the one-number service server. The soft switch and the one-number service server may communicate with each other by using the SIP or the INAP protocol.

In step 76, the one-number service server queries the stored corresponding relationship between the called number before the conversion and the called number after the conversion based on the converted called number reported by the soft switch, so as to obtain the called number before the conversion. After identifying that the original called number is the number A, the one-number service server executes the service logic of the one-number service to which the number A subscribes, and delivers the call to the soft switch.

For example, when the one-number service server and the soft switch communicate with each other by using the SIP, the one-number service server delivers two calls to the soft switch simultaneously, one calling the called mobile phone number A (for the call with the called number A, an alternative embodiment may be similar to the third embodiment, in which a roaming number may be connected directly after the roaming number for the number A is obtained) and the other one calling the mobile phone number A'. Meanwhile, a prefix is added to the calling number, so as to prevent the call from being triggering repeatedly in the mobile network.

In step 77, after the soft switch receives the calls intended for the called numbers A and A' that are delivered by the one-number service server, a gateway office/tandem office of the NGN network routes the two calls to the GSM network.

In step 78, the GSM network connects the call with the called number A', as normal.

In steps 79-710, for the call with the called number A, the gateway office of the GSM network searches again the HLR for the subscription information about the called number A, to learn that the number A subscribes to the one-number service. The call is triggered again over the intelligent service protocol of the mobile network, to the one-number service server, which determines based on the prefix before the calling number that this is the second triggering, and connects the called number A directly after removing the prefix before the calling number.

Alternatively, in the step 78, after identifying that the original called number of the call is the mobile phone number A', the one-number service server may search the HLR directly for a mobile station roaming number of the number A'. The service logic of the one-number service to which the number A subscribes is executed, and the call is delivered to the soft switch. After the soft switch receives the call intended for the called number A that is delivered by the one-number service server, the called number A' and the called number A are connected via the mobile network.

According to the above process, when the subscriber dials the mobile phone terminal number, the mobile phone terminal and another mobile phone terminal subscribing to the same one-number service ring at the same time.

After one of the two mobile phone terminals answers the call, the call intended for the other one is released by the soft switch or the one-number service server.

In an embodiment of the invention, the number of terminals subscribing to the same one-number service may be more than two. In this case, the one-number service server will deliver more than two calls to the soft switch. The ringing modes of the more than two calls may be configured flexibly in a sequential order on a one-by-one basis, for example, sequential ringing, co-ringing, mixed ringing, ringing based on a time period, etc. Thereby, the features of a more generalized one-number service may be implemented.

In embodiments of the invention, when a terminal subscribing to the one-number service places an outgoing call, the display modes of the calling number may be set flexibly, including, for example: 1) the calling number being displayed as the original calling number; 2) the calling number being displayed fixedly as the mobile phone terminal number A; 3) the calling number being displayed fixedly as the fixed phone terminal number A'; and 4) the calling number being displayed as the number set by the subscriber independently.

A scheme combining the one-number service according the third and fourth embodiments with the customized ring-back tone (RBT) service is as follows.

When a subscriber calls one of the terminals subscribing to the one-number service, the one-number service server may set flexibly the ring tone played by each terminal subscribing to the one-number service when ringing.

For example, when the subscriber dials the fixed phone terminal number, both of the terminals ring, but the subscriber hears a customized RBT of the fixed phone terminal. When the subscriber dials the mobile phone terminal number, both of the terminals ring, but the subscriber hears a customized RBT of the mobile phone terminal.

When the subscriber dials the mobile phone terminal number, if the one-number service server and a service trigger point in a core network communicate with each other by using the SIP, then the order, time duration and stop of the ringing may be implemented by using the flexible control ability of the SIP.

A person of ordinary skill in the art may appreciate that all or a part of the method steps described according to the above embodiments may be implemented in the associated hardware instructed by a computer program, which may be stored in a computer readable storage medium, such as magnetic disk, optical disk, read-only memory (ROM), random access memory (RAM), etc. When being executed, the program may embody the various methods according to the above described embodiments.

In summary, the embodiments of the invention make full use of the combinational advantage in the current integration of the mobile and fixed networks to provide a one-number service applicable to both mobile network terminals and fixed network terminals. The service features of the one-number service are enriched and the user experience is enhanced without extending the protocols or changing and upgrading the hardware devices.

In the embodiments of the invention, a one-number service server is provided, which may regard various subscriber terminals (including fixed terminals and mobile terminals) subscribing to the same one-number service as the primary terminal and flexibly control the ringing mode of each terminal, the calling number for an outgoing call, the ring of a incoming call, etc.

In summary, the embodiments described above merely represent some specific preferred embodiments of the invention and the scope of the invention is not limited to these embodiments. Modifications or replacements easily conceivable to persons skilled in the art without departing from the scope of the disclosure shall fall within the scope of the invention. Therefore, the scope of the invention shall be defined only by the appended claims.

## Claims

1. A one-number service server, comprising:
a call receiving module(11), configured to receiving a call reported by a mobile switching center, MSC, in a mobile network intended for a called terminal which is a mobile phone terminal;
a number conversion module(15), configured to learn , after acquiring information of a number of the called terminal based on information reported by the MSC in the mobile network, that the number of the called terminal subscribes to the same one-number service as a number of an another terminal, convert the number of the called terminal into a first specific number, store a corresponding relationship between the calling number, and the number of the called terminal before and after the conversion, and return the call comprising the first specific number to the MSC in the mobile network so that the MSC in the mobile network forwards the call comprising the first specific number to a soft switch in a fixed network based on the first specific number and based on a routing rule preset in the MSC for the first specific number; wherein, the first specific number is used to indicate that the called terminal has subscribed to the one-number service;
wherein, the call receiving module(11) is further configured to receive the call comprising the first specific number, wherein, the call comprising the first specific number is triggered by the soft switch in the fixed network; and
the one-number service server further comprises:
an information acquisition module(12), configured to acquire after receiving the call comprising the first specific number from the soft switch of the fixed network, according to the first specific number and the stored corresponding relationship between the calling number, and the number of the called terminal and before and after the conversion, information about the called terminal and information about the another terminal subscribing to the same one-number service as the called terminal, and query a mobile station roaming number, MSRN, for the number of the called number from Home Location Register, HLR; and
a call delivery module(13), configured to deliver a call comprising the MSRN and a call comprising the number of the another terminal respectively to the soft switch in the fixed network so that the soft switch in the fixed network triggers the mobile network to connect the call comprising the MSRN and triggers the fixed network to connect the call comprising the number of the another terminal.

2. The one-number service server according to claim 1, further comprising:
an information management module(14), configured to store information about a subscriber terminal subscribing to the one-number service and to store information about more than one terminal subscribing to the same one-number service in an associated manner, the more than one terminal subscribing to the same one-number service comprising at least one mobile subscriber terminal.

3. The one-number service server according to claim 1, further comprising a call releasing module(16), wherein:
after one called terminal subscribing to the one-number service connects the call, the call releasing module(16) is configured to release the call intended for the another terminal subscribing to the one-number service.

4. A method for implementing a one-number service, wherein more than one terminal subscribing to the same one-number service comprises at least one mobile subscriber terminal, the method comprising:
receiving, by a one-number service server, a call reported by a mobile switching center, MSC, in a mobile network intended for a called terminal which is a mobile phone terminal, and learning, after acquiring information of a number of the called terminal based on information reported by the MSC of the mobile network, that the number of the called terminal subscribes to the same one-number service as a number of the another terminal , converting the number of the called terminal into a first specific number; wherein the first specific number is used to indicate that the called terminal subscribes to the one-number service;
storing, by the one-number service server, a corresponding relationship between the calling number, and the number of the called terminal before and after the conversion; and
returning, by the one-number service server, the call comprising the first specific number to the MSC in the mobile network so that the MSC in the mobile network forwards the call comprising the first specific number to a soft switch of a fixed network based on the first specific number and based on a routing rule preset in the MSC for the first specific number;
receiving, by the one-number service server, the call comprising the first specific number which is triggered by the soft switch in the fixed network;
acquiring after receiving the call comprising the first specific number from the soft switch of the fixed network, according to the first specific number and the stored corresponding relationship between the calling number, and the number of the called terminal before and after the conversion, information about the called terminal and information about the another terminal subscribing to the same one-number service as the called terminal, and querying a mobile station roaming number ,MSRN, for the number of the called number from Home Location Register, HLR; and
delivering a call comprising the MSRN and a call comprising the number of the another terminal respectively to the soft switch in the fixed network so that the soft switch in the fixed network triggers the fixed network to connect the call comprising the number of the another terminal and triggers the mobile network to connect the call comprising the MSRN.

5. The method according to claim 4, wherein the acquiring information about the another terminal subscribing to the same one-number service as the called terminal comprises:
querying stored information about all terminals subscribing to the one-number service based on information about the number of the called terminal, so as to obtain information about the another terminal subscribing to the same one-number service as the called terminal.

6. The method according to claim 5, wherein when the another terminal is a fixed terminal, the method further comprises:
triggering, by the soft switch in the fixed network, the fixed network to connect the call comprising the number of the another terminal intended for the fixed terminal, and
forwarding the received call comprising the MSRN and the routing information of the called terminal to the mobile network for connection.

7. The method according to claim 4 or 5, further comprising:
after the called terminal subscribing to the one-number service connects the call, releasing the call intended for the another terminal subscribing to the one-number service; or
after delivering the call intended for each terminal subscribing to the one-number service, setting a ringing mode for the terminal; or when a terminal subscribing to the one-number service places an outgoing call, setting a display mode for the calling number of the terminal.

## Patentansprüche

1. Eine-Nummer-Dienst-Server, der Folgendes umfasst:
ein Anrufempfangsmodul (11), das konfiguriert ist, einen Anruf zu empfangen, der durch eine Mobilfunkvermittlungsstelle, MSC, in einem mobilen Netz berichtet wird und für ein gerufenes Endgerät bestimmt ist, das ein Mobiltelefonendgerät ist;
ein Nummernumsetzungsmodul (15), das konfiguriert ist, nach dem Erfassen von Informationen über eine Nummer des gerufenen Endgeräts basierend auf Informationen, die durch die MSC in dem mobilen Netz berichtet werden, zu erkennen, dass die Nummer des gerufenen Endgerätes denselben Eine-Nummer-Dienst abonniert hat wie eine Nummer eines weiteren Endgeräts, die Nummer des gerufenen Endgeräts in eine erste spezifische Nummer umzusetzen, eine Zuordnungsbeziehung zwischen der rufenden Nummer und der Nummer des gerufenen Endgeräts vor und nach der Umsetzung zu speichern, und den Anruf, der die erste spezifische Nummer umfasst, zu der MSC in dem mobilen Netz zurückzugeben, so dass die MSC in dem mobilen Netz den Anruf, der die erste spezifische Nummer umfasst, zu einem "Softswitch" in einem Festnetz basierend auf der ersten spezifischen Nummer und basierend auf einer Lenkungsregel, die in der MSC für die erste spezifische Nummer voreingestellt ist, weiterleitet; wobei die erste spezifische Nummer verwendet wird, um anzugeben, dass das gerufene Endgerät den Eine-Nummer-Dienst abonniert hat;
wobei das Anrufempfangsmodul (11) ferner konfiguriert ist, den Anruf, der die erste spezifische Nummer umfasst, zu empfangen, wobei der Anruf, der die erste spezifische Nummer umfasst, durch den "Softswitch" in dem Festnetz initiiert wird; und
der Eine-Nummer-Dienst-Server ferner Folgendes umfasst:
ein Informationserfassungsmodul (12), das konfiguriert ist, nach dem Empfangen des Anrufs, der die erste spezifische Nummer umfasst, von dem "Softswitch" des Festnetzes gemäß der ersten spezifischen Nummer und der gespeicherten Zuordnungsbeziehung zwischen der rufenden Nummer und der Nummer des gerufenen Endgeräts und vor und nach der Umsetzung, Informationen über das gerufene Endgerät und Informationen über das weitere Endgerät, das denselben Eine-Nummer-Dienst abonniert hat wie das rufende Endgerät, zu erfassen und eine Mobilstationsaufenthaltsrufnummer, MSRN, für die Nummer der gerufenen Nummer von der Heimatdatei, HLR, abzufragen; und
ein Anrufzustellungsmodul (13), das konfiguriert ist, einen Anruf, der die MSRN umfasst, bzw. einen Anruf, der die Nummer des weiteren Endgeräts umfasst, zu dem "Softswitch" in dem Festnetz zuzustellen, so dass der "Softswitch" in dem Festnetz initiiert, dass das mobile Netz den Anruf, der die MSRN umfasst, verbindet, und initiiert, dass das Festnetz den Anruf, der die Nummer des weiteren Endgeräts umfasst, verbindet.

2. Eine-Nummer-Dienst-Server nach Anspruch 1, der ferner Folgendes umfasst:
ein Informationsmanagementmodul (14), das konfiguriert ist, Informationen über ein Teilnehmerendgerät, das den Eine-Nummer-Dienst abonniert hat, zu speichern und Informationen über mehr als ein Endgerät, das denselben Eine-Nummer-Dienst abonniert hat, in Art einer Zuordnung zu speichern, wobei das mehr als eine Endgerät, das denselben Eine-Nummer-Dienst abonniert hat, wenigstens ein Mobilteilnehmerendgerät umfasst.

3. Eine-Nummer-Dienst-Server nach Anspruch 1, der ferner ein Anrufabbaumodul (16) umfasst, wobei:
nachdem ein gerufenes Endgerät, das den Eine-Nummer-Dienst abonniert hat, den Anruf verbindet, das Anrufabbaumodul (16) konfiguriert ist, den Anruf, der für das weitere Endgerät, das den Eine-Nummer-Dienst abonniert hat, bestimmt ist, abzubauen.

4. Verfahren zum Implementieren eines Eine-Nummer-Dienstes, wobei mehr als ein Endgerät, das denselben Eine-Nummer-Dienst abonniert hat, wenigstens ein Mobilteilnehmerendgerät umfasst, und wobei das Verfahren Folgendes umfasst:
Empfangen durch einen Eine-Nummer-Dienst-Server eines Anrufs, der durch eine Mobilfunkvermittlungsstelle, MSC, in einem mobilen Netz berichtet wird und der für ein gerufenes Endgerät bestimmt ist, das ein Mobiltelefonendgerät ist, und Erkennen nach dem Erfassen von Informationen über eine Nummer des gerufenen Endgeräts basierend auf Informationen, die durch die MSC des mobilen Netzes berichtet werden, dass die Nummer des gerufenen Endgeräts denselben Eine-Nummer-Dienst abonniert hat wie eine Nummer des weiteren Endgeräts, Umsetzen der Nummer des gerufenen Endgeräts in eine erste spezifische Nummer; wobei die erste spezifische Nummer verwendet wird, um anzugeben, dass das gerufene Endgerät den Eine-Nummer-Dienst abonniert hat;
Speichern einer Zuordnungsbeziehung zwischen der rufenden Nummer und der Nummer des gerufenen Endgeräts vor und nach der Umsetzung durch den Eine-Nummer-Dienst-Server; und
Zurückgeben des Anrufs, der die erste spezifische Nummer umfasst, durch den Eine-Nummer-Dienst-Server zu der MSC in dem mobilen Netz, so dass die MSC in dem mobilen Netz den Anruf, der die erste spezifische Nummer umfasst, zu einem "Softswitch" eines Festnetzes basierend auf der ersten spezifischen Nummer und basierend auf einer Lenkungsregel, die in der MSC für die erste spezifische Nummer voreingestellt ist, weiterleitet;
Empfangen durch den Eine-Nummer-Dienst-Server des Anrufs, der die erste spezifische Nummer umfasst und der durch den "Softswitch" des Festnetzes initiiert wird;
Erfassen nach dem Empfangen des Anrufs, der die erste spezifische Nummer umfasst, von dem "Softswitch" des Festnetzes gemäß der ersten spezifischen Nummer und der gespeicherten Zuordnungsbeziehung zwischen der rufenden Nummer und der Nummer des gerufenen Endgeräts vor und nach der Umsetzung,
von Informationen über das gerufene Endgerät und Informationen über das weitere Endgerät, das denselben Eine-Nummer-Dienst abonniert hat wie das rufende Endgerät, und Abfragen einer Mobilstationsaufenthaltsrufnummer, MSRN, für die Nummer der gerufenen Nummer von der Heimatdatei, HLR; und
Zustellen eines Anrufs, der die MSRN umfasst, bzw. eines Anrufs, der die Nummer des weiteren Endgeräts umfasst, zu dem "Softswitch" in dem Festnetz, so dass der "Softswitch" in dem Festnetz initiiert, dass das Festnetz den Anruf, der die Nummer des weiteren Endgeräts umfasst, verbindet und initiiert, dass das mobile Netz den Anruf, der die MSRN umfasst, verbindet.

5. Verfahren nach Anspruch 4, wobei das Erfassen von Informationen über das weitere Endgerät, das denselben Eine-Nummer-Dienst abonniert hat wie das rufende Endgerät, Folgendes umfasst:
Abfragen von gespeicherten Informationen über alle Endgeräte, die den Eine-Nummer-Dienst abonniert haben, basierend auf Informationen über die Nummer des gerufenen Endgeräts, um Informationen über das weitere Endgerät, das denselben Eine-Nummer-Dienst abonniert hat wie das gerufene Endgerät, zu erhalten.

6. Verfahren nach Anspruch 5, wobei dann, wenn das weitere Endgerät ein festes Endgerät ist, das Verfahren ferner Folgendes umfasst:
Initiieren durch den "Softswitch" in dem Festnetz, dass das Festnetz den Anruf, der die Nummer des weiteren Endgeräts umfasst und der für das feste Endgerät bestimmt ist, verbindet, und
Weiterleiten des empfangenen Anrufs, der die MSRN und die Lenkungsinformationen des rufenden Endgeräts umfasst, zur Verbindung zu dem mobilen Netz.

7. Verfahren nach Anspruch 4 oder 5, das ferner Folgendes umfasst:
nachdem das gerufene Endgerät, das den Eine-Nummer-Dienst abonniert hat, den Anruf verbindet, Abbauen des Anrufs, der für das weitere Endgerät, das den Eine-Nummer-Dienst abonniert hat, bestimmt ist; oder
nach dem Zustellen des Anrufs, der für jedes Endgerät, das den Eine-Nummer-Dienst abonniert hat, bestimmt ist, Einstellen einer Klingelbetriebsart für das Endgerät; oder
wenn ein Endgerät, das den Eine-Nummer-Dienst abonniert hat, einen abgehenden Anruf tätigt, Einstellen einer Anzeigebetriebsart für die rufende Nummer des Endgeräts.

## Revendications

1. Serveur d'un service à numéro unique, comprenant :
un module de réception d'appel (11), configuré pour recevoir un appel rapporté par un centre de commutation mobile, MSC, dans un réseau mobile destiné à un terminal appelé qui est un terminal de téléphone mobile ;
un module de conversion de numéro (15), configuré pour apprendre, après avoir acquis des informations d'un numéro du terminal appelé sur la base d'informations rapportées par le MSC dans le réseau mobile, que le numéro du terminal appelé s'abonne au même service de numéro unique qu'un numéro d'un autre terminal, pour convertir le numéro du terminal appelé en un premier numéro spécifique, pour stocker une relation correspondante entre le numéro appelant, et le numéro du terminal appelé avant et après la conversion, et pour retourner l'appel comprenant le premier numéro spécifique au MSC dans le réseau mobile de manière à ce que le MSC dans le réseau mobile transfère l'appel comprenant le premier numéro spécifique à un commutateur logiciel dans un réseau fixe sur la base du premier numéro spécifique et sur la base d'une règle de routage prédéfinie dans le MSC pour le premier numéro spécifique ; où le premier numéro spécifique est utilisé pour indiquer que le terminal appelé s'est abonné au service à numéro unique ;
où, le module de réception d'appel (11) est en outre configuré pour recevoir l'appel comprenant le premier numéro spécifique, où l'appel comprenant le premier numéro spécifique est déclenché par le commutateur logiciel dans le réseau fixe ; et
le serveur de service à numéro unique comprend en outre :
un module d'acquisition d'informations (12), configuré pour acquérir, après réception de l'appel comprenant le premier numéro spécifique depuis le commutateur logiciel du réseau fixe, conformément au premier numéro spécifique et à la relation correspondante stockée entre le numéro appelant , et le numéro du terminal appelé et
avant et après la conversion, des informations concernant le terminal appelé et des informations concernant l'autre terminal s'abonnant au même service à numéro unique que le terminal appelé, et pour interroger un numéro d'itinérance de station mobile, MSRN, pour le numéro du numéro appelé depuis un enregistreur de localisation nominal, HLR ; et
un module de délivrance d'appel (13), configuré pour délivrer un appel comprenant le MSRN et un appel comprenant le numéro de l'autre terminal, respectivement, au commutateur logiciel dans le réseau fixe de manière à ce que le commutateur logiciel dans le réseau fixe déclenche le réseau mobile pour connecter l'appel comprenant le MSRN et déclenche le réseau fixe pour connecter l'appel comprenant le numéro de l'autre terminal.

2. Serveur de service à numéro unique selon la revendication 1, comprenant en outre :
un module de gestion d'informations (14), configuré pour stocker des informations concernant un terminal d'abonné s'abonnant au service à numéro unique et pour stocker des informations concernant plus d'un terminal s'abonnant au même service à numéro unique d'une manière associée, le plus d'un terminal s'abonnant au même service à numéro unique comprenant au moins un terminal d'abonné mobile.

3. Serveur de service à numéro unique selon la revendication 1, comprenant en outre un module de libération d'appel (16), dans lequel :
après qu'un terminal appelé s'abonnant au service à numéro unique a connecté l'appel, le module de libération d'appel (16) est configuré pour libérer l'appel destiné à l'autre terminal s'abonnant au service à numéro unique.

4. Procédé pour mettre en oeuvre un service à numéro unique, dans lequel plus d'un terminal s'abonnant au même service à numéro unique comprend au moins un terminal d'abonné mobile, le procédé comprenant les étapes suivantes :
recevoir, par un serveur de service à numéro unique, un appel rapporté par un centre de commutation mobile, MSC, dans un réseau mobile destiné à un terminal appelé qui est un terminal de téléphone mobile, et apprendre, après avoir acquis des informations d'un numéro du terminal appelé sur la base d'informations rapportées par le MSC du réseau mobile, que le numéro du terminal appelé s'abonne au même service à numéro unique qu'un numéro d'un autre terminal, convertir le numéro du terminal appelé en un premier numéro spécifique ; où le premier numéro spécifique est utilisé pour indiquer que le terminal appelé s'abonne au service à numéro unique ;
stocker, par le serveur de service à numéro unique, une relation correspondante entre le numéro appelant, et le numéro du terminal appelé avant et après la conversion ; et
retourner, par le serveur de service à numéro unique, l'appel comprenant le premier numéro spécifique au MSC dans le réseau mobile de manière à ce que le MSC dans le réseau mobile transfère l'appel comprenant le premier numéro spécifique à un commutateur logiciel dans un réseau fixe sur la base du premier numéro spécifique et sur la base d'une règle de routage prédéfinie dans le MSC pour le premier numéro spécifique ;
recevoir, par le serveur de service à numéro unique, l'appel comprenant le premier numéro spécifique qui est déclenché par le commutateur logiciel dans le réseau fixe ;
acquérir, après réception de l'appel comprenant le premier numéro spécifique depuis le commutateur logiciel du réseau fixe, conformément au premier numéro spécifique et à la relation correspondante stockée entre le numéro appelant, et le numéro du terminal appelé avant et après la conversion, des informations concernant le terminal appelé et des informations concernant l'autre terminal s'abonnant au même service à numéro unique que le terminal appelé, et interroger un numéro d'itinérance de station mobile, MSRN, pour le numéro du numéro appelé depuis un enregistreur de localisation nominal, HLR ; et
délivrer un appel comprenant le MSRN et un appel comprenant le numéro de l'autre terminal, respectivement, au commutateur logiciel dans le réseau fixe de manière à ce que le commutateur logiciel dans le réseau fixe déclenche le réseau fixe pour connecter l'appel comprenant le numéro de l'autre terminal et déclenche le réseau mobile pour connecter l'appel comprenant le MSRN.

5. Procédé selon la revendication 4, dans lequel l'acquisition d'informations concernant l'autre terminal s'abonnant au même service à numéro unique que le terminal appelé comprend l'étape suivante :
interroger des informations stockées concernant tous les terminaux s'abonnant au service à numéro unique sur la base des informations concernant le numéro du terminal appelé, afin d'obtenir des informations concernant l'autre terminal s'abonnant au même service à numéro unique que le terminal appelé.

6. Procédé selon la revendication 5, dans lequel lorsque l'autre terminal est un terminal fixe, le procédé comprend en outre les étapes suivantes :
déclencher, par le commutateur logiciel dans le réseau fixe, le réseau fixe pour connecter l'appel comprenant le numéro de l'autre terminal destiné au terminal fixe, et
transférer l'appel reçu comprenant le MSRN et les informations de routage du terminal appelé au réseau mobile pour connexion.

7. Procédé selon la revendication 4 ou la revendication 5, comprenant en outre les étapes suivantes :
après que le terminal appelé s'abonnant au service à numéro unique a connecté l'appel, libérer l'appel destiné à l'autre terminal s'abonnant au service à numéro unique ; ou
après la délivrance de l'appel destiné à chaque terminal s'abonnant au service à numéro unique, définir un mode de sonnerie pour le terminal ; ou lorsqu'un terminal s'abonnant au service à numéro unique effectue un appel sortant, définir un mode d'affichage pour le numéro appelant du terminal.
